# EUROPEAN PATENT SPECIFICATION

(11) **EP 3 270 529 B1**
(45) Date of publication and mention of the grant of the patent: **22.04.2020**
(21) Application number: 17181205.0
(22) Date of filing: 13.07.2017
(51) Int. Cl.: H04B 10/548, H04B 10/60

(54) **OPTICAL TRANSMISSION ASSEMBLY**
OPTISCHE ÜBERTRAGUNGSBAUGRUPPE
ENSEMBLE DE TRANSMISSION OPTIQUE

(30) Priority: 15.07.2016 CN 201610567478
(43) Date of publication of application: 17.01.2018
(73) Proprietor: HUAWEI TECHNOLOGIES CO., LTD., Shenzhen Guangdong 518129 (CN)
(72) Inventor: HU, Rulong, Shenzhen, Guangdong 518129 (CN); LU, Dan, Shenzhen, Guangdong 518129 (CN); CUI, Zhenwei, Shenzhen, Guangdong 518129 (CN); SHUAI, Jialong, Shenzhen, Guangdong 518129 (CN); GAO, Fei, Shenzhen, Guangdong 518129 (CN)
(74) Representative: Pfenning, Meinig & Partner mbB

(56) References cited:
- EP-A2- 2 624 589
- BERIL INAN ET AL: "Realization of a 23.9 Gb/s real time optical-OFDM transmitter with a 1024 point IFFT", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946288, ISBN: 978-1-4577-0213-6

## Description

### TECHNICAL FIELD

The present invention relates to the field of fiber-optic communications, and in particular, to an optical transmission assembly.

### BACKGROUND

With the development of fiber-optic communications technologies, optical fibers have entered various fields of wired communications, such as fields including posts and telecommunications, broadcast communications, electric power communications, petroleum communications, and military communications. In fiber-optic communications, an optical transmission assembly includes an optical transmitter module, an optical receiver module, a wavelength division multiplexer, a wavelength division demultiplexer, a clock and data recovery circuit, and the like. In a conventional optical transmission assembly, 100 gigabits of data can be transmitted per second by using four processing lines, and 25 gigabits of data can be transmitted per second by using each processing line.

In the prior art, four processing lines are configured for an optical transmitter module in an optical transmission assembly. Each processing line includes a driver and a laser. The laser of each processing line has a different light-emitting wavelength. In each processing line, after an electrical signal is transmitted to the driver, the driver amplifies the electrical signal and transmits an amplified electrical signal to the laser. The laser converts the amplified electrical signal to an optical signal and transmits the optical signal to a wavelength division multiplexer. The wavelength division multiplexer couples optical signals in the four processing lines into one optical fiber for sending outside.

There are also four processing lines configured for an optical receiver module in the optical transmission assembly. Each processing line includes a detector and a preamplifier. A wavelength division demultiplexer in the optical transmission assembly divides a received optical signal into four optical signals and transmits the four signals to the four processing lines respectively. The detector in each processing line converts a received optical signal to an electrical signal and transmits the converted-to electrical signal to the preamplifier. The preamplifier amplifies the electrical signal and transmits an amplified electrical signal to a clock and data recovery circuit. The clock and data recovery circuit performs clock and data recovery on the electrical signal amplified by the preamplifier, to obtain a transmitted electrical signal.
EP2624589A2 discloses systems and methods for Ethernet Passive Optical Network Over Coaxial (EPOC) power saving modes. The EPOC power savings modes allow an EPOC coaxial network unit (CNU) to enter a sleep mode based on user traffic characteristics. The sleep mode may include powering down one or more module of the EPOC CNU, including radio frequency (RF) transmit/receive circuitry and associated circuitry. In embodiments, the EPOC CNU may enter sleep mode based on instructions from an optical line terminal (OLT) or based on its own determination. Embodiments further include systems and methods that allow the EPOC CNU to maintain synchronization with a servicing coaxial media converter (CMC) when it enters a sleep mode.
"Realization of a 23.9 Gb/s real time optical-OFDM transmitter with a 1024 point IFFT" (Beril Inan et al, 2011 and the National Fiber Optic Engineers Conference, Los Angeles, CA, USA) reports a FPGA-based real time 23.9-Gb/s CO-OFDM transmitter with IQ-mixing with a 1024 point FFT, the largest FFT-size reported to date. For a BER of 10-3 a required OSNR of 10.8 dB is measured.

The prior art has the following problem:
In the optical transmitter module, each processing line includes a laser, and a spacing between light-emitting wavelengths of lasers in different processing lines is relatively small. As lasers have a relatively strict requirement on temperature, if the temperature changes, a light-emitting wavelength and an optical power of the laser change, affecting data transmission. Therefore, one temperature control device is provided correspondingly for each laser, resulting in relatively high costs of the optical transmission assembly.

### SUMMARY

To resolve the problem in the prior art, embodiments of the present invention provide an optical transmission assembly. The technical solution is as follows:
According to a first aspect, an optical transmission assembly is provided, where the optical transmission assembly includes a serializer, a high-order modulation unit, a digital-analog conversion unit, and an optical transmission module, where
the serializer and the high-order modulation unit are electrically connected, the high-order modulation unit and the digital-analog conversion unit are electrically connected, and the digital-analog conversion unit and the optical transmission module are electrically connected;
the optical transmission module includes at least one transmit processing unit and at least one receive processing unit;
the serializer is configured to serially combine every two of multiple electrical signals that are input into the optical transmission assembly, to obtain a serially mixed electrical signal; and is further configured to serially split a serially mixed electrical signal received from the high-order modulation unit, to obtain and output multiple electrical signals; and
the high-order modulation unit is a pulse amplitude modulation four (PAM4) unit or a Discrete Multi-Tone (DMT) unit.

An optical transmission assembly includes a serializer, a high-order modulation unit, a digital-analog conversion unit, and an optical transmission module. The serializer and the high-order modulation unit are electrically connected. The serializer can serially combine every two of multiple electrical signals that are input into the optical transmission assembly, to obtain a serially mixed electrical signal. In addition, the serializer can serially split a serially mixed electrical signal received from the high-order modulation unit, to obtain multiple electrical signals. The high-order modulation unit and the digital-analog conversion unit are electrically connected. The digital-analog conversion unit can convert a digital electrical signal received from the high-order modulation unit to an analog electrical signal, and can further convert an analog electrical signal received from the optical transmission module to a digital electrical signal. The transmit processing unit can convert an electrical signal received from the digital-analog conversion unit to an optical signal and transmit the optical signal into an optical fiber. The receive processing unit can convert an optical signal received from an optical fiber to an electrical signal and amplify the electrical signal.

With reference to the first aspect, in a first possible implementation of the first aspect, the transmit processing unit includes a driver and a laser; and
the driver is electrically connected to both the digital-analog conversion unit and the laser.

The transmit processing unit includes a driver and a laser. The driver is electrically connected to both the digital-analog conversion unit and the laser.

With reference to the first aspect, in a second possible implementation of the first aspect, the receive processing unit includes a detector and a preamplifier; and
the preamplifier is electrically connected to both the detector and the digital-analog conversion unit.

The receive processing unit includes a detector and a preamplifier. The preamplifier is electrically connected to both the detector and the digital-analog conversion unit. The detector includes a photoelectric diode that can convert a received optical signal to an electrical signal. The preamplifier can amplify an electrical signal received from the detector and transmit an amplified electrical signal to the digital-analog conversion unit.

With reference to the first aspect, in a third possible implementation of the first aspect, the optical transmission assembly further includes a clock and data recovery circuit; and
the clock and data recovery circuit is disposed in a line between the serializer and an electrical-signal transmission port of the optical transmission assembly.

The optical transmission assembly further includes a clock and data recovery circuit. The clock and data recovery circuit may be disposed in a line between the serializer and an electrical-signal transmission port of the optical transmission assembly. The clock and data recovery circuit can insert a clock signal into a to-be-transmitted electrical signal, and can extract a clock signal from a received electrical signal and recover data from the received electrical signal by using the extracted clock signal.

With reference to the first aspect, in a fourth possible implementation of the first aspect, the digital-analog conversion unit is configured to preprocess the serially mixed electrical signal received from the high-order modulation unit and a serially mixed electrical signal received from the receive processing unit, where the preprocessing includes at least pre-emphasis processing, level spacing adjustment, signal balancing processing, non-linear processing, and intercode interference processing.

The digital-analog conversion unit can preprocess the serially mixed electrical signal received from the high-order modulation unit, and can further preprocess a serially mixed electrical signal received from the receive processing unit. Because a spacing between four levels may change during transmission, the digital-analog conversion unit may decrease a relatively wide level spacing of the serially mixed electrical signal and may increase a relatively narrow level spacing. The digital-analog conversion unit may perform pre-emphasis processing and the like on the serially mixed electrical signal received from the high-order modulation unit.

With reference to the first aspect, in a fifth possible implementation of the first aspect, the optical transmission assembly includes at least one optical input/output port and at least one optical splitting apparatus;
a quantity of the optical splitting apparatuses and quantities of the optical input/output ports, the transmit processing units, and the receive processing units are equal;
the optical splitting apparatus includes a first port, a second port, and a third port; and
the optical splitting apparatus is configured to transmit, to the optical input/output port by using the second port, an optical signal output by the transmit processing unit and received by the first port; and is further configured to transmit, to the receive processing unit by using the third port, an optical signal transmitted by the optical input/output port and received by the second port.

The optical splitting apparatus may include a 45-degree filter. The optical splitting apparatus can transmit, to the optical input/output port by using a second port, an optical signal output by the transmit processing unit and received by a first port. In addition, the optical splitting apparatus can transmit, to the receive processing unit by using a third port, an optical signal transmitted by the optical input/output port and received by the second port. That is, the 45-degree filter can reflect, to the third port, all optical signals transmitted by the optical input/output port and received by the second port, and transmit the optical signals to the receive processing unit via the third port. Therefore, by using the optical splitting apparatus, the optical transmission assembly can simultaneously transmit an optical signal to an optical fiber and receive an optical signal transmitted by the optical fiber. A wavelength of the optical signal transmitted to the optical fiber is not equal to a wavelength of the received optical signal transmitted by the optical fiber.

With reference to the fifth possible implementation of the first aspect, in a sixth possible implementation of the first aspect, the quantity of the transmit processing units and the quantity of the receive processing units in the optical transmission module are both 2.

With reference to the sixth possible implementation of the first aspect, in a seventh possible implementation of the first aspect, the optical transmission module includes a first transmit processing unit, a second transmit processing unit, a first receive processing unit, and a second receive processing unit;
the first transmit processing unit is configured to transmit an optical signal of a first preset wavelength, and the first receive processing unit is configured to receive an optical signal of a second preset wavelength; and
the second transmit processing unit is configured to transmit the optical signal of the second preset wavelength, and the second receive processing unit is configured to receive the optical signal of the first preset wavelength.

The optical transmission module may include a first transmit processing unit, a second transmit processing unit, a first receive processing unit, and a second receive processing unit. The first transmit processing unit and the first receive processing unit share one optical input/output port. The second transmit processing unit and the second receive processing unit also share one optical input/output port.

With reference to the seventh possible implementation of the first aspect, in an eighth possible implementation of the first aspect, the first preset wavelength is 1270 nanometers and the second preset wavelength is 1330 nanometers.

With reference to the fifth possible implementation of the first aspect, in a ninth possible implementation of the first aspect, the optical transmission assembly further includes at least one filter;
a quantity of the filters is equal to the quantity of the receive processing units; and
the filter is disposed at an optical input port of the receive processing unit.

The optical transmission assembly further includes at least one filter. A quantity of the filters is equal to the quantity of the receive processing units. One receive processing unit corresponds to one filter. The filter may be disposed at an optical input port of the receive processing unit, and may be specifically disposed in a lens cap. The filter may allow only a wavelength corresponding to an optical signal that the receive processing unit needs to receive to pass through.

With reference to the fifth possible implementation of the first aspect, in a tenth possible implementation of the first aspect, at least one convex lens is further disposed in an optical path between the transmit processing unit and the optical splitting apparatus, and a wavelength of the at least one convex lens is equal to a wavelength of an optical signal transmitted by the transmit processing unit; and
at least one convex lens is further disposed in an optical path between the receive processing unit and the optical input/output port, and a wavelength of the at least one convex lens is equal to a wavelength of an optical signal received by the receive processing unit.

The at least one convex lens is configured to focus an optical signal to optimize a flare of the optical signal. In regard to the at least one convex lens further disposed in an optical path between the transmit processing unit and the optical splitting apparatus, a wavelength of the at least one convex lens is equal to a wavelength of an optical signal transmitted by the transmit processing unit, and the at least one convex lens may be one convex lens or may be two convex lenses (relay lenses). In regard to the at least one convex lens further disposed in an optical path between the receive processing unit and the optical input/output port, a wavelength of the at least one convex lens is equal to a wavelength of an optical signal received by the receive processing unit, and the at least one convex lens may be one convex lens or may be three convex lenses (one convex lens and two relay lenses).

The technical solution provided by the embodiments of the present invention brings about the following beneficial effects:

In the embodiments of the present invention, an optical transmission assembly includes a serializer, a high-order modulation unit, a digital-analog conversion unit, and an optical transmission module. In the optical transmission assembly, because a serializer and a high-order modulation unit are configured, the serializer can serially combine any two electrical signals to obtain a serially mixed electrical signal, and the high-order modulation unit can modulate a high-and-low-level signal to a four-level signal or a DMT signal. Therefore, compared with the prior art, to transmit a same volume of data, only at least half lasers may be used, and further, only at least half temperature control devices are used. In this way, costs of an optical transmission assembly are reduced for transmission of a same volume of data.

### BRIEF DESCRIPTION OF DRAWINGS

The accompanying drawings herein are incorporated into the specification and constitute a part of the specification. The accompanying drawings illustrate embodiments that comply with this disclosure, and are used together with the specification to explain principles of this disclosure. In the accompanying drawings:
FIG. 1 is a schematic structural diagram of an optical transmission assembly according to an embodiment of the present invention;
FIG. 2 is a schematic structural diagram of an optical transmission assembly according to an embodiment of the present invention;
FIG. 3 is a schematic structural diagram of an optical transmission assembly according to an embodiment of the present invention;
FIG. 4 is a schematic structural diagram of an optical transmission assembly according to an embodiment of the present invention;
FIG. 5 is a schematic structural diagram of an optical transmission assembly according to an embodiment of the present invention; and
FIG. 6 is a schematic structural diagram of an optical transmission assembly according to an embodiment of the present invention.

Embodiments specified in this disclosure have been shown by using the accompanying drawings, and more detailed descriptions are to be provided later. These accompanying drawings and text descriptions are intended not to limit the scope of the idea of this disclosure in any manner, but to explain, by referring to specific embodiments, the idea of this disclosure to persons skilled in the art.

**Reference numerals:**

| | |
|---|---|
| 1 Serializer | 2 High-order modulation unit |
| 3 Digital-analog conversion unit | 4 Optical transmission module |
| 41 Transmit processing unit | 42 Receive processing unit |
| 5 Clock and data recovery circuit | 6 Optical input/output port |
| 7 Optical splitting apparatus | 71 First port |
| 72 Second port | 8 Filter |
| 9 Convex lens | 73 Third port |
| 411 Driver | 412 Laser |
| 421 Detector | 422 Preamplifier |

### DESCRIPTION OF EMBODIMENTS

To make the objectives, technical solutions, and advantages of the present invention clearer, the following further describes the embodiments of the present invention in detail with reference to the accompanying drawings.

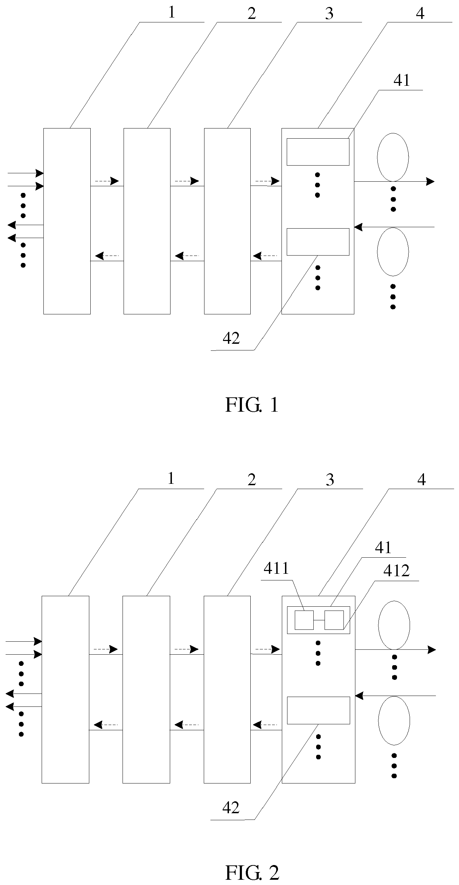

The embodiments of the present invention provide an optical transmission assembly. As shown in FIG. 1, the optical transmission assembly includes a serializer 1, a high-order modulation unit 2, a digital-analog conversion unit 3, and an optical transmission module 4. The serializer 1 and the high-order modulation unit 2 are electrically connected. The high-order modulation unit 2 and the digital-analog conversion unit 3 are electrically connected. The digital-analog conversion unit 3 and the optical transmission module 4 are electrically connected. The optical transmission module 4 includes at least one transmit processing unit 41 and at least one receive processing unit 42. The serializer 1 is configured to serially combine every two of multiple electrical signals that are input into the optical transmission assembly, to obtain a serially mixed electrical signal; and is further configured to serially split a serially mixed electrical signal received from the high-order modulation unit 2, to obtain and output multiple electrical signals.

In practice, the optical transmission assembly includes a serializer 1, a high-order modulation unit 2, a digital-analog conversion unit 3, and an optical transmission module 4. The serializer 1 and the high-order modulation unit 2 are electrically connected. The serializer 1 can serially combine every two of multiple electrical signals that are input into the optical transmission assembly, to obtain a serially mixed electrical signal. For example, four electrical signals (each electrical signal is 25 Gbps) are input into the optical transmission assembly. The serializer 1 can serially combine every two of the four electrical signals to obtain two serially mixed electrical signals (each serially mixed electrical signal is 50 Gbps). In addition, the serializer 1 can further serially split a serially mixed electrical signal received from the high-order modulation unit 2, to obtain multiple electrical signals. For example, two serially mixed electrical signals received from the high-order modulation unit 2 are 50 Gbps. The serializer 1 can serially split the two serially mixed electrical signals into four electrical signals, with each electrical signal being 25 Gbps.

The high-order modulation unit 2 can modulate a serially mixed electrical signal received from the serializer 1 and output a modulated serially mixed electrical signal to the digital-analog conversion unit 3, and can further demodulate a modulated serially mixed electrical signal received from the digital-analog conversion unit 3, to obtain a serially mixed electrical signal and output the obtained serially mixed electrical signal to the serializer 1. The high-order modulation unit 2 may be a PAM4 (Pulse Amplitude Modulation Four) unit or a DMT (Discrete Multi-Tone) unit. PAM4 is time domain modulation. DMT is frequency domain modulation.

The PAM4 unit can convert a serially mixed electrical signal received from the serializer 1 from a high-and-low-level signal to a four-level signal (for example, convert 50 Gbps electrical signals to electrical signals of a 25 Gbps baud rate), that is, converting two level signals to four level signals, and input the four-level signal into the digital-analog conversion unit 3. The PAM4 unit can further convert a four-level electrical signal received from the digital-analog conversion unit 3 to a high-and-low-level electrical signal, that is, converting four level signals to two level signals, and input the high-and-low-level signal into the serializer 1.

The DMT unit can serialize multiple serially mixed electrical signals received from the serializer 1 into a frame-format data packet, and transmit the frame-format data packet to the digital-analog conversion unit 3. The DMT can further split a frame-format data packet received from the digital-analog conversion unit 3 into serially mixed electrical signals. Therefore, if four electrical signals (each electrical signal being 25 Gbps) are input into the optical transmission assembly, the serializer 1 can serially combine every two of the four electrical signals to obtain two 50 Gbps serially mixed electrical signals. The DMT unit may separately serialize the two 50 Gbps serially mixed electrical signals into 50 Gbps frame-format data packets, and input the two 50 Gbps frame-format data packets into the digital-analog conversion unit 3. Alternatively, the DMT unit may serialize the two 50 Gbps serially mixed electrical signals into a 100 Gbps frame-format data packet, and input the 100 Gbps frame-format data packet into the digital-analog conversion unit 3.

The digital-analog conversion unit 3 and the optical transmission module 4 are electrically connected. The digital-analog conversion unit 3 can convert a digital electrical signal received from the high-order modulation unit 2 to an analog electrical signal, and can further convert an analog electrical signal received from the optical transmission module 4 to a digital electrical signal (herein, the digital-analog conversion unit 3 that receives the analog electrical signal from the optical transmission module 4 may be referred to as an analog-to-digital conversion unit). The transmit processing unit 41 can convert an electrical signal received from the digital-analog conversion unit 3 to an optical signal and transmit the optical signal into an optical fiber. The receive processing unit 42 can convert an optical signal received from an optical fiber to an electrical signal, amplify the electrical signal (because the received optical signal is relatively weak, the electrical signal that the optical signal is converted to is also relatively weak; for this reason, the electrical signal is amplified), and transmit an amplified electrical signal to the digital-analog conversion unit 3.

Optionally, as shown in FIG. 2, the transmit processing unit 41 includes a driver 411 and a laser 412. The driver 411 is electrically connected to both the digital-analog conversion unit 3 and the laser 412.

In practice, the transmit processing unit 41 includes a driver 411 and a laser 412. The driver 411 is electrically connected to both the digital-analog conversion unit 3 and the laser 412. The driver 411 can linearly amplify a four-level electrical signal received from the digital-analog conversion unit 3, and input a linearly amplified four-level electrical signal into the laser 412, to drive the laser 412. The laser 412 can convert the linearly amplified four-level electrical signal to an optical signal and transmit the optical signal into an optical fiber.

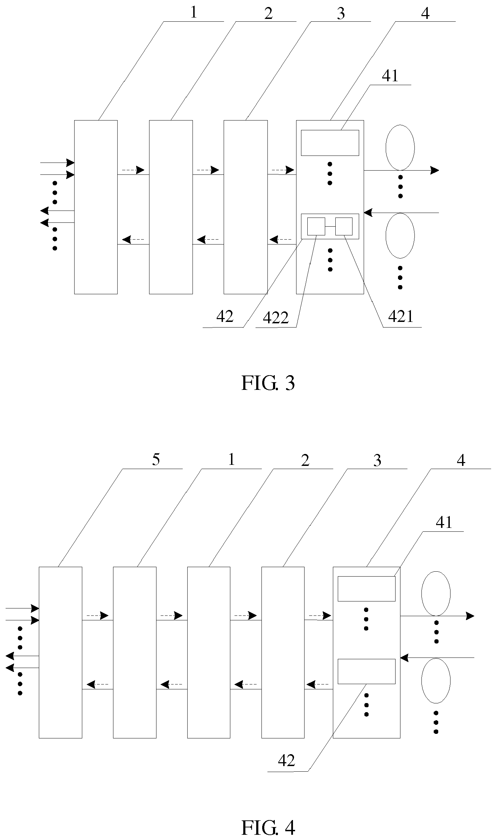

Optionally, as shown in FIG. 3, the receive processing unit 42 includes a detector 421 and a preamplifier 422. The preamplifier 422 is electrically connected to both the detector 421 and the digital-analog conversion unit 3.

The digital-analog conversion unit 3 connected to the receive processing unit 42 may be referred to as an analog-to-digital conversion unit.

In practice, the receive processing unit 42 includes a detector 421 and a preamplifier 422. The preamplifier 422 is electrically connected to both the detector 421 and the digital-analog conversion unit 3. The detector 421 includes a photoelectric diode that can convert a received optical signal to an electrical signal. The preamplifier 422 can amplify an electrical signal received from the detector 421 and transmit an amplified electrical signal to an analog-to-digital conversion unit.

Optionally, as shown in FIG. 4, the optical transmission assembly further includes a clock and data recovery circuit 5. The clock and data recovery circuit 5 is disposed in a line between the serializer 1 and an electrical-signal transmission port of the optical transmission assembly.

In practice, the optical transmission assembly further includes a clock and data recovery circuit 5. The clock and data recovery circuit 5 may be disposed in a line between the serializer 1 and an electrical-signal transmission port of the optical transmission assembly. The clock and data recovery circuit 5 can extract a clock signal from a received electrical signal and recover data from the received electrical signal by using the extracted clock signal.

Optionally, the digital-analog conversion unit 3 is configured to preprocess the serially mixed electrical signal received from the high-order modulation unit 2 and a serially mixed electrical signal received from the receive processing unit 42. The preprocessing includes at least pre-emphasis processing, level spacing adjustment, signal balancing processing, non-linear processing, and intercode interference processing.

In practice, the digital-analog conversion unit 3 can preprocess the serially mixed electrical signal received from the high-order modulation unit 2, and the digital-analog conversion unit 3 can further preprocess a serially mixed electrical signal received from the receive processing unit 42. The preprocessing may be pre-emphasis processing, level spacing adjustment, intercode interference processing, non-linear processing, signal balancing, and the like. For example, the digital-analog conversion unit 3 may perform pre-emphasis processing on a serially mixed electrical signal received from the high-order modulation unit 2, may further perform level spacing adjustment on the serially mixed electrical signal received from the high-order modulation unit 2, and may further perform level spacing adjustment on a serially mixed electrical signal received from the receive processing unit 42. The serially mixed electrical signal is of four levels. Because a spacing between the four levels may change during transmission, the digital-analog conversion unit 3 may decrease a relatively wide spacing of the serially mixed electrical signal and may increase a relatively narrow level spacing. The digital-analog conversion unit 3 may further perform signal balancing processing, non-linear processing, intercode interference processing, and the like on the serially mixed electrical signal received from the high-order modulation unit 2 and the serially mixed electrical signal received from the receive processing unit 42, so as to reduce a bit error rate.

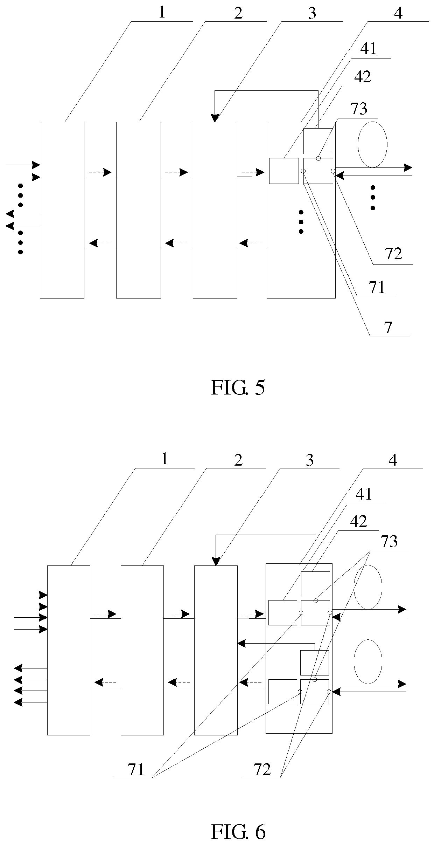

Optionally, as shown in FIG. 5, the optical transmission assembly includes at least one optical input/output port 6 and at least one optical splitting apparatus 7.

A quantity of the optical splitting apparatuses 7 and quantities of the optical input/output ports 6, the transmit processing units 41, and the receive processing units 42 are equal.

The optical splitting apparatus 7 includes a first port 71, a second port 72, and a third port 73.

The optical splitting apparatus 7 is configured to transmit, to the optical input/output port 6 by using the second port 72, an optical signal output by the transmit processing unit 41 and received by the first port 71; and is further configured to transmit, to the receive processing unit 42 by using the third port 73, an optical signal transmitted by the optical input/output port 6 and received by the second port 72.

In practice, the optical transmission assembly may further include at least one optical input/output port 6 and at least one optical splitting apparatus 7. The optical input/output port 6 can simultaneously receive an optical signal and transmit an optical signal. A quantity of the optical splitting apparatuses 7 and quantities of the optical input/output ports 6, the transmit processing units 41, and the receive processing units 42 are equal. That is, one optical splitting apparatus 7 corresponds to one optical input/output port 6, one transmit processing unit 41, and one receive processing unit 42.

The optical splitting apparatus 7 may include a 45-degree filter. The optical splitting apparatus 7 can transmit, to the optical input/output port 6 by using a second port 72, an optical signal output by the transmit processing unit 41 and received by a first port 71. The optical splitting apparatus 7 can also transmit, to the receive processing unit 42 by using a third port 73, an optical signal transmitted by the optical input/output port 6 and received by the second port 72. That is, the 45-degree filter can reflect, to the third port 73, all optical signals transmitted by the optical input/output port 6 and received by the second port 72, and transmit the optical signals to the receive processing unit via the third port 73. Therefore, by using the optical splitting apparatus 7, the optical transmission assembly can simultaneously transmit an optical signal to an optical fiber and receive an optical signal transmitted by the optical fiber. A wavelength of the optical signal transmitted by the optical transmission assembly to the optical fiber is not equal to a wavelength of the optical signal received by the optical transmission assembly and transmitted by the optical fiber.

Optionally, as shown in FIG. 6, the quantity of the transmit processing units 41 and the quantity of the receive processing units 42 in the optical transmission module 4 are both 2.

In practice, a quantity of the transmit processing units 41 and a quantity of the receive processing units 42 in the optical transmission module 4 may both be 2. Similarly, there are two optical input/output ports 6. For example, four electrical signals are input into the optical transmission assembly. Each electrical signal is 25 Gbps. Each optical input/output port transmits optical signals that two electrical signals are converted to, each equivalent to a baud rate of 25 Gbps. At the same time, each optical input/output port receives two optical signals, where each optical signal is equivalent to a baud rate of 25 Gbps. Therefore, one optical input/output port can simultaneously transmit and receive data at a baud rate of 25 Gbps, and two optical input/output ports can simultaneously transmit and receive data at a baud rate of 50 Gbps.

Optionally, as shown in FIG. 6, the optical transmission module 4 includes a first transmit processing unit 41, a second transmit processing unit 41, a first receive processing unit 42, and a second receive processing unit 42.

The first transmit processing unit 41 is configured to transmit an optical signal of a first preset wavelength. The first receive processing unit 42 is configured to receive an optical signal of a second preset wavelength.

The second transmit processing unit 41 is configured to transmit the optical signal of the second preset wavelength. The second receive processing unit 42 is configured to receive the optical signal of the first preset wavelength.

In practice, the optical transmission module 4 may include a first transmit processing unit 41, a second transmit processing unit 41, a first receive processing unit 42, and a second receive processing unit 42. The first transmit processing unit 41 and the first receive processing unit 42 share one optical input/output port 6. The second transmit processing unit 41 and the second receive processing unit 42 also share one optical input/output port 6.

The first transmit processing unit 41 can transmit an optical signal of a first preset wavelength. That is, a light-emitting wavelength of a laser in the first transmit processing unit 41 is the first preset wavelength. The first receive processing unit 42 can receive an optical signal of a second preset wavelength. That is, a detector in the first receive processing unit 42 can convert the optical signal of the second preset wavelength to an electrical signal.

The second transmit processing unit 41 can transmit the optical signal of the second preset wavelength. That is, a light-emitting wavelength of a laser in the second transmit processing unit 41 is the second preset wavelength. The second receive processing unit 42 can receive the optical signal of the first preset wavelength. That is, a detector in the second receive processing unit 42 can convert the optical signal of the first preset wavelength to an electrical signal.

For example, the first preset wavelength is 1270 nanometers and the second preset wavelength is 1330 nanometers. The first transmit processing unit 41 can receive an optical signal whose wavelength is 1330 nanometers at the same time when transmitting an optical signal whose wavelength is 1270 nanometers. Similarly, the second transmit processing unit 41 can receive an optical signal whose wavelength is 1270 nanometers at the same time when transmitting an optical signal whose wavelength is 1330 nanometers.

Optionally, the first preset wavelength is 1270 nanometers and the second preset wavelength is 1330 nanometers.

In practice, two wavelengths in a band 0 may be selected as the light-emitting wavelength of the laser in the first transmit processing unit 41 and the light-emitting wavelength of the laser in the second transmit processing unit 41. The first preset wavelength may be 1270 nanometers, and the second preset wavelength may be 1330 nanometers. In this way, both a transmission distance and a filter cost may be ensured, and the wavelengths do not affect each other because of a wide gap between the wavelengths.

Optionally, the optical transmission assembly further includes at least one filter.

A quantity of the filters is equal to the quantity of the receive processing units.

The filter is disposed at an optical input port of the receive processing unit.

In practice, the optical transmission assembly further includes at least one filter 8 (for example, at least one 0-degree filter). A quantity of the filters 8 is equal to the quantity of the receive processing units 42. One receive processing unit 42 corresponds to one filter 8. The filter 8 may be disposed at an optical input port of the receive processing unit 42, and may be specifically disposed in a lens cap. The filter 8 may allow only a wavelength corresponding to an optical signal that the receive processing unit 42 needs to receive to pass through. For example, the filter is a 0-degree filter, and a wavelength of an optical signal that the receive processing unit 42 needs to receive is 1270 nanometers. In this case, the 0-degree filter 8 at the optical input port of the receive processing unit 42 allows only an optical signal whose wavelength is 1270 nanometers to pass through and filters out all optical signals of other wavelengths.

Optionally, at least one convex lens 9 is further disposed in an optical path between the transmit processing unit 41 and the optical splitting apparatus 7. A wavelength of the at least one convex lens 9 is equal to a wavelength of an optical signal transmitted by the transmit processing unit 41.

At least one convex lens 10 is further disposed in an optical path between the receive processing unit 42 and the optical input/output port 6. A wavelength of the at least one convex lens 10 is equal to a wavelength of an optical signal received by the receive processing unit 42.

In practice, at least one convex lens 9 is further disposed in an optical path between the transmit processing unit 41 and the optical splitting apparatus 7, and a wavelength of the at least one convex lens 9 is equal to a light-emitting wavelength of the laser in the transmit processing unit 41. The at least one convex lens may be configured to focus an optical signal output by the transmit processing unit 41, so that a flare size of the optical signal exactly fits an input port of an optical fiber when the optical signal output by the transmit processing unit 41 is transmitted to the input port of the optical fiber. Because a distance between the transmit processing unit 41 and the optical input/output port 6 is relatively long, the convex lens may be configured as a convex lens of a large focal length if there is only one convex lens in the optical path between the transmit processing unit 41 and the optical input/output port 6. Alternatively, two convex lenses (which may be referred to as relay lenses) may be further disposed in the optical path between the transmit processing unit 41 and the optical splitting apparatus 7.

At least one convex lens 10 may be further disposed in an optical path between the receive processing unit 42 and the optical input/output port 6. A wavelength of the at least one convex lens 10 is equal to a wavelength of an optical signal received by the receive processing unit 42, that is, equal to a wavelength that can be detected by the detector in the receive processing unit 42. The at least one convex lens 10 may be configured to focus an optical signal received from the optical input/output port 6, so that a flare size of an optical signal transmitted to the receive processing unit 42 exactly fits the detector in the receive processing unit 42. The at least one convex lens may be one convex lens and may be disposed at an optical transmission port of the receive processing unit 42. Because a distance between the optical transmission port of the receive processing unit 42 and the detector in the receive processing unit is relatively short, the one convex lens may be a lens of a small focal length. The at least one lens may be three convex lenses. In addition to one convex lens disposed at an optical transmission port of the receive processing unit 42, two convex lenses (which may be referred to as relay lenses) may be further disposed in an optical path between the optical splitting apparatus 7 and the optical input/output port 6.

In actual use of the foregoing convex lens, a convex lens of an appropriate focal length is selected according to an actual focus requirement of an optical signal. This is not limited herein.

In the embodiments of the present invention, an optical transmission assembly includes a serializer, a high-order modulation unit, a digital-analog conversion unit, and an optical transmission module. In the optical transmission assembly, because a serializer and a high-order modulation unit are configured, the serializer can serially combine any two electrical signals to obtain a serially mixed electrical signal, and the high-order modulation unit can modulate a high-and-low-level signal to a four-level signal or a DMT signal. Therefore, compared with the prior art, to transmit a same volume of data, only at least half lasers may be used, and further, only at least half temperature control devices are used. In this way, costs of an optical transmission assembly are reduced for transmission of a same volume of data.

Persons of ordinary skill in the art may understand that all or some of the steps of the embodiments may be implemented by using hardware or a program instructing related hardware. The program may be stored in a computer-readable storage medium. The storage medium may be a read-only memory, a magnetic disk, an optical disc, or the like.

The foregoing descriptions are merely examples of the embodiments of the present invention, but are not intended to limit the present invention. Any modification, equivalent replacement, and improvement made without departing from the principle of the present invention shall fall within the protection scope of the present invention.

## Claims

1. An optical transmission assembly, wherein the optical transmission assembly comprises a serializer (1), a high-order modulation unit (2), a digital-analog conversion unit (3), and an optical transmission module (4), wherein
the serializer (1) and the high-order modulation unit (2) are electrically connected, the high-order modulation unit (2) and the digital-analog conversion unit (3) are electrically connected, and the digital-analog conversion unit (3) and the optical transmission module (4) are electrically connected;
the optical transmission module (4) comprises at least one transmit processing unit (41) and at least one receive processing unit (42);
the serializer (1) is configured to serially combine every two of multiple electrical signals that are input into the optical transmission assembly, to obtain a serially mixed electrical signal; and is further configured to serially split a serially mixed electrical signal received from the high-order modulation unit (2), to obtain and output multiple electrical signals;
the high-order modulation unit (2) is configured to modulate the serially mixed electrical signal received from the serializer (1) and output a modulated serially mixed electrical signal to the digital-analog conversion unit (3), and is further configured to demodulate a modulated serially mixed electrical signal received from the digital-analog conversion unit (3), to obtain the serially mixed electrical signal and output the serially mixed electrical signal to the serializer (1);
the digital-analog conversion unit (3) is configured to convert the modulated serially mixed electrical signal received from the high-order modulation unit (2) to an analog electrical signal and output the analog electrical signal to the optical transmission module (4), and is further configured to convert an analog electrical signal received from the optical transmission module (4) to the modulated serially mixed electrical signal and output the modulated serially mixed electrical signal to the high-order modulation unit (2); and
the high-order modulation unit (2) is a pulse amplitude modulation four, PAM4, unit or a Discrete Multi-Tone, DMT, unit.

2. The optical transmission assembly according to claim 1, wherein the transmit processing unit (41) comprises a driver (411) and a laser (412); and
the driver (411) is electrically connected to both the digital-analog conversion unit (3) and the laser (412).

3. The optical transmission assembly according to claim 1 or 2, wherein the receive processing unit (42) comprises a detector (421) and a preamplifier (422); and
the preamplifier (422) is electrically connected to both the detector (421) and the digital-analog conversion unit (3).

4. The optical transmission assembly according to any one of claims 1 to 3, wherein the optical transmission assembly further comprises a clock and data recovery circuit (5); and
the clock and data recovery circuit (5) is disposed in a line between the serializer (1) and an electrical-signal transmission port of the optical transmission assembly.

5. The optical transmission assembly according to any one of claims 1 to 4, wherein the digital-analog conversion unit (3) is configured to preprocess the serially mixed electrical signal received from the high-order modulation unit (2) and a serially mixed electrical signal received from the receive processing unit (42), wherein the preprocessing comprises at least pre-emphasis processing, level spacing adjustment, signal balancing processing, non-linear processing, and intercode interference processing.

6. The optical transmission assembly according to any one of claims 1 to 5, wherein the optical transmission assembly comprises at least one optical input/output port and at least one optical splitting apparatus (7);
a quantity of the optical splitting apparatuses (7) and quantities of the optical input/output ports, the transmit processing units (41), and the receive processing units (42) are equal;
the optical splitting apparatus (7) comprises a first port (71), a second port (72), and a third port (73); and
the optical splitting apparatus (7) is configured to transmit, to the optical input/output port by using the second port (72), an optical signal output by the transmit processing unit (41) and received by the first port (71); and is further configured to transmit, to the receive processing unit (42) by using the third port (73), an optical signal transmitted by the optical input/output port and received by the second port (72).

7. The optical transmission assembly according to claim 6, wherein the quantity of the transmit processing units (41) and the quantity of the receive processing units (42) in the optical transmission module (4) are both 2.

8. The optical transmission assembly according to claim 7, wherein the optical transmission module (4) comprises a first transmit processing unit (41), a second transmit processing unit (41), a first receive processing unit (42), and a second receive processing unit (42);
the first transmit processing unit (41) is configured to transmit an optical signal of a first preset wavelength;
the first receive processing unit (42) is configured to receive an optical signal of a second preset wavelength;
the second transmit processing unit (41) is configured to transmit the optical signal of the second preset wavelength; and
the second receive processing unit (42) is configured to receive the optical signal of the first preset wavelength.

9. The optical transmission assembly according to claim 8, wherein the first preset wavelength is 1270 nanometers and the second preset wavelength is 1330 nanometers.

10. The optical transmission assembly according to claim 6, wherein the optical transmission assembly further comprises at least one filter;
a quantity of the filters is equal to the quantity of the receive processing units (42); and
the filter is disposed at an optical input port of the receive processing unit (42).

11. The optical transmission assembly according to claim 6, wherein at least one convex lens is further disposed in an optical path between the transmit processing unit (41) and the optical splitting apparatus (7), and a wavelength of the at least one convex lens is equal to a wavelength of an optical signal transmitted by the transmit processing unit (41); and
at least one convex lens is further disposed in an optical path between the receive processing unit (42) and the optical input/output port, and a wavelength of the at least one convex lens is equal to a wavelength of an optical signal received by the receive processing unit (42).

## Patentansprüche

1. Optische Übertragungsanordnung, wobei die optische Übertragungsanordnung einen Parallel-Serien-Wandler (1), eine Modulationseinheit (2) hoher Ordnung, eine Digital-Analog-Wandlungseinheit (3) und ein optisches Übertragungsmodul (4) umfasst, wobei
der Parallel-Serien-Wandler (1) und die Modulationseinheit (2) hoher Ordnung elektrisch verbunden sind, die Modulationseinheit (2) hoher Ordnung und die Digital-Analog-Wandlungseinheit (3) elektrisch verbunden sind und die Digital-Analog-Wandlungseinheit (3) und das optische Übertragungsmodul (4) elektrisch verbunden sind;
das optische Übertragungsmodul (4) mindestens eine Sendeverarbeitungseinheit (41) und mindestens eine Empfangsverarbeitungseinheit (42) umfasst;
der Parallel-Serien-Wandler (1) ausgestaltet ist, jede zwei von mehreren elektrischen Signalen seriell zu kombinieren, die in die optische Übertragungsanordnung eingegeben werden, um ein seriell gemischtes elektrisches Signal zu erhalten; und ferner ausgestaltet ist, ein von der Modulationseinheit (2) hoher Ordnung empfangenes seriell gemischtes elektrisches Signal seriell zu splitten, um mehrere elektrische Signale zu erhalten und auszugeben;
die Modulationseinheit (2) hoher Ordnung ausgestaltet ist, das von dem Parallel-Serien-Wandler (1) empfangene seriell gemischte elektrische Signal zu modulieren und ein moduliertes seriell gemischtes elektrisches Signal an die Digital-Analog-Wandlungseinheit (3) auszugeben, und ferner ausgestaltet ist, ein von der Digital-Analog-Wandlungseinheit (3) empfangenes moduliertes seriell gemischtes elektrisches Signal zu demodulieren, um das seriell gemischte elektrische Signal zu erhalten und das seriell gemischte elektrische Signal an den Parallel-Serien-Wandler (1) auszugeben;
die Digital-Analog-Wandlungseinheit (3) ausgestaltet ist, das von der Modulationseinheit (2) hoher Ordnung empfangene modulierte seriell gemischte elektrische Signal in ein analoges elektrisches Signal umzuwandeln und das analoge elektrische Signal an das optische Übertragungsmodul (4) auszugeben, und ferner ausgestaltet ist, ein von dem optischen Übertragungsmodul (4) empfangenes analoges elektrisches Signal in das modulierte seriell gemischte elektrische Signal umzuwandeln und das modulierte seriell gemischte elektrische Signal an die Modulationseinheit (2) hoher Ordnung auszugeben; und
die Modulationseinheit (2) hoher Ordnung eine Pulsamplitudenmodulation vier, PAM4,-Einheit oder eine diskrete Mehrton, DMT,-Einheit ist.

2. Optische Übertragungsanordnung nach Anspruch 1, wobei die Sendeverarbeitungseinheit (41) einen Treiber (411) und einen Laser (412) umfasst;
und
der Treiber (411) mit der Digital-Analog-Wandlungseinheit (3) und dem Laser (412) elektrisch verbunden ist.

3. Optische Übertragungsanordnung nach Anspruch 1 oder 2, wobei die Empfangsverarbeitungseinheit (42) einen Detektor (421) und einen Vorverstärker (422) umfasst; und
der Vorverstärker (422) mit dem Detektor (421) und der Digital-Analog-Wandlungseinheit (3) elektrisch verbunden ist.

4. Optische Übertragungsanordnung nach einem der Ansprüche 1 bis 3, wobei die optische Übertragungsanordnung ferner eine Takt- und Datenwiederherstellungsschaltung (5) umfasst; und
die Takt- und Datenwiederherstellungsschaltung (5) in einer Linie zwischen dem Parallel-Serien-Wandler (1) und einem elektrischen Signalübertragungsanschluss der optischen Übertragungsanordnung angeordnet ist.

5. Optische Übertragungsanordnung nach einem der Ansprüche 1 bis 4, wobei die Digital-Analog-Wandlungseinheit (3) ausgestaltet ist, das von der Modulationseinheit (2) hoher Ordnung empfangene seriell gemischte elektrische Signal und ein von der Empfangsverarbeitungseinheit (42) empfangenes seriell gemischtes elektrisches Signal vorzuverarbeiten, wobei das Vorverarbeiten mindestens eine Vorverzerrungsverarbeitung, Niveauabstandanpassung, Signalausgleichsverarbeitung, nichtlineare Verarbeitung und Intercodeinterferenzverarbeitung umfasst.

6. Optische Übertragungsanordnung nach einem der Ansprüche 1 bis 5, wobei die optische Übertragungsanordnung mindestens einen optischen Eingangs-/Ausgangsanschluss und mindestens eine optische Splittingeinrichtung (7) umfasst;
wobei eine Anzahl der optischen Splittingeinrichtungen (7) und Anzahlen der optischen Eingangs-/Ausgangsanschlüsse, der Sendeverarbeitungseinheiten (41) und der Empfangsverarbeitungseinheiten (42) gleich sind;
wobei die optische Splittingeinrichtung (7) einen ersten Anschluss (71), einen zweiten Anschluss (72) und einen dritten Anschluss (73) umfasst; und
die optische Splittingeinrichtung (7) ausgestaltet ist, an den optischen Eingangs-/Ausgangsanschluss unter Verwenden des zweiten Anschlusses (72) ein optisches Signal zu übertragen, das durch die Sendeverarbeitungseinheit (41) ausgegeben und durch den ersten Anschluss (71) empfangen ist; und ferner ausgestaltet ist, an die Empfangsverarbeitungseinheit (42) unter Verwenden des dritten Anschlusses (73) ein optisches Signal zu übertragen, das durch den optischen Eingangs-/Ausgangsanschluss übertragen und durch den zweiten Anschluss (72) empfangen ist.

7. Optische Übertragungsanordnung nach Anspruch 6, wobei die Anzahl der Sendeverarbeitungseinheiten (41) und die Anzahl der Empfangsverarbeitungseinheiten (42) in dem optischen Übertragungsmodul (4) jeweils 2 ist.

8. Optische Übertragungsanordnung nach Anspruch 7, wobei das optische Übertragungsmodul (4) eine erste Sendeverarbeitungseinheit (41), eine zweite Sendeverarbeitungseinheit (41), eine erste Empfangsverarbeitungseinheit (42) und eine zweite Empfangsverarbeitungseinheit (42) umfasst;
wobei die erste Sendeverarbeitungseinheit (41) ausgestaltet ist, ein optisches Signal einer ersten voreingestellten Wellenlänge zu übertragen;
wobei die erste Empfangsverarbeitungseinheit (42) ausgestaltet ist, ein optisches Signal einer zweiten voreingestellten Wellenlänge zu empfangen;
wobei die zweite Sendeverarbeitungseinheit (41) ausgestaltet ist, das optische Signal der zweiten voreingestellten Wellenlänge zu übertragen; und
wobei die zweite Empfangsverarbeitungseinheit (42) ausgestaltet ist, das optische Signal der ersten voreingestellten Wellenlänge zu empfangen.

9. Optische Übertragungsanordnung nach Anspruch 8, wobei die erste voreingestellte Wellenlänge 1270 Nanometer ist und die zweite voreingestellte Wellenlänge 1330 Nanometer ist.

10. Optische Übertragungsanordnung nach Anspruch 6, wobei die optische Übertragungsanordnung ferner mindestens ein Filter umfasst;
wobei eine Anzahl der Filter gleich der Anzahlen der Empfangsverarbeitungseinheiten (42) ist; und
das Filter an einem optischen Eingangsanschluss der Empfangsverarbeitungseinheit (42) angeordnet ist.

11. Optische Übertragungsanordnung nach Anspruch 6, wobei mindestens eine konvexe Linse ferner in einem optischen Pfad zwischen der Sendeverarbeitungseinheit (41) und der optischen Splittingeinrichtung (7) angeordnet ist, und eine Wellenlänge der mindestens einen konvexen Linse gleich einer Wellenlänge eines durch die Sendeverarbeitungseinheit (41) übertragenen optischen Signals ist; und
wobei mindestens eine konvexe Linse ferner in einem optischen Pfad zwischen der Empfangsverarbeitungseinheit (42) und dem optischen Eingangs-/Ausgangsanschluss angeordnet ist, und eine Wellenlänge der mindestens einen konvexen Linse gleich einer Wellenlänge eines durch die Empfangsverarbeitungseinheit (42) empfangenen optischen Signals ist.

## Revendications

1. Ensemble de transmission optique, dans lequel l'ensemble de transmission optique comprend un convertisseur parallèle/série (1), une unité de modulation d'ordre élevé (2), une unité de conversion numérique/analogique (3), et un module de transmission optique (4), dans lequel
le convertisseur parallèle/série (1) et l'unité de modulation d'ordre élevé (2) sont électriquement connectés, l'unité de modulation d'ordre élevé (2) et l'unité de conversion numérique/analogique (3) sont électriquement connectées, et l'unité de conversion numérique/analogique (3) et le module de transmission optique (4) sont électriquement connectés ;
le module de transmission optique (4) comprend au moins une unité de traitement de transmission (41) et au moins une unité de traitement de réception (42) ;
le convertisseur parallèle/série (1) est configuré pour combiner en série un signal sur deux de plusieurs signaux électriques qui sont entrés dans l'ensemble de transmission optique, afin d'obtenir un signal électrique mixé en série ; et est en outre configuré pour diviser en série un signal électrique mixé en série reçu de l'unité de modulation d'ordre élevé (2), afin d'obtenir et de sortir plusieurs signaux électriques ;
l'unité de modulation d'ordre élevé (2) est configurée pour moduler le signal électrique mixé en série reçu du convertisseur parallèle/série (1) et pour sortir un signal électrique mixé en série modulé à destination de l'unité de conversion numérique/analogique (3), et est en outre configurée pour démoduler un signal électrique mixé en série modulé reçu de l'unité de conversion numérique/analogique (3), afin d'obtenir le signal électrique mixé en série et de sortir le signal électrique mixé en série à destination du convertisseur parallèle/série (1) ;
l'unité de conversion numérique/analogique (3) est configurée pour convertir le signal électrique mixé en série modulé, reçu de l'unité de modulation d'ordre élevé (2), en un signal électrique analogique et pour sortir le signal électrique analogique à destination du module de transmission optique (4), et est en outre configurée pour convertir un signal électrique analogique, reçu du module de transmission optique (4), en signal électrique mixé en série modulé et pour sortir le signal électrique mixé en série modulé à destination de l'unité de modulation d'ordre élevé (2) ; et
l'unité de modulation d'ordre élevé (2) est une unité de modulation d'impulsions en amplitude quatre, PAM4, ou une unité à multitonalité discrète, DMT.

2. Ensemble de transmission optique selon la revendication 1, dans lequel l'unité de traitement de transmission (41) comprend un pilote (411) et un laser (412) ; et
le pilote (411) est électriquement connecté à la fois à l'unité de conversion numérique/analogique (3) et au laser (412).

3. Ensemble de transmission optique selon la revendication 1 ou 2, dans lequel l'unité de traitement de réception (42) comprend un détecteur (421) et un préamplificateur (422) ; et
le préamplificateur (422) est électriquement connecté à la fois au détecteur (421) et à l'unité de conversion numérique/analogique (3).

4. Ensemble de transmission optique selon l'une quelconque des revendications 1 à 3, dans lequel l'ensemble de transmission optique comprend en outre un circuit de récupération d'horloge et de données (5) ; et
le circuit de récupération d'horloge et de données (5) est disposé sur une ligne entre le convertisseur parallèle/série (1) et un port de transmission de signal électrique de l'ensemble de transmission optique.

5. Ensemble de transmission optique selon l'une quelconque des revendications 1 à 4, dans lequel l'unité de conversion numérique/analogique (3) est configurée pour prétraiter le signal électrique mixé en série, reçu de l'unité de modulation d'ordre élevé (2), et un signal électrique mixé en série, reçu de l'unité de traitement de réception (42), le prétraitement comprenant au moins un traitement de préaccentuation, un ajustement d'espacement de niveaux, un traitement d'équilibrage de signal, un traitement non linéaire et un traitement d'interférence intercode.

6. Ensemble de transmission optique selon l'une quelconque des revendications 1 à 5, dans lequel l'ensemble de transmission optique comprend au moins un port d'entrée/sortie optique et au moins un appareil de division optique (7) ;
une quantité des appareils de division optique (7) et les quantités des ports d'entrée/sortie optiques, des unités de traitement de transmission (41) et des unités de traitement de réception (42) sont identiques ;
l'appareil de division optique (7) comprend un premier port (71), un deuxième port (72) et un troisième port (73) ; et
l'appareil de division optique (7) est configuré pour transmettre, au port d'entrée/sortie optique en utilisant le deuxième port (72), un signal optique sorti par l'unité de traitement de transmission (41) et reçu par le premier port (71) ; et est en outre configuré pour transmettre, à l'unité de traitement de réception (42) en utilisant le troisième port (73), un signal optique transmis par le port d'entrée/sortie optique et reçu par le deuxième port (72).

7. Ensemble de transmission optique selon la revendication 6, dans lequel la quantité des unités de traitement de transmission (41) et la quantité des unités de traitement de réception (42) dans le module de transmission optique (4) sont toutes les deux égales à 2.

8. Ensemble de transmission optique selon la revendication 7, dans lequel le module de transmission optique (4) comprend une première unité de traitement de transmission (41), une deuxième unité de traitement de transmission (41), une première unité de traitement de réception (42) et une deuxième unité de traitement de réception (42) ;
la première unité de traitement de transmission (41) est configurée pour transmettre un signal optique d'une première longueur d'onde préréglée ;
la première unité de traitement de réception (42) est configurée pour recevoir un signal optique d'une deuxième longueur d'onde préréglée ;
la deuxième unité de traitement de transmission (41) est configurée pour transmettre le signal optique de la deuxième longueur d'onde préréglée ; et
la deuxième unité de traitement de réception (42) est configurée pour recevoir le signal optique de la première longueur d'onde préréglée.

9. Ensemble de transmission optique selon la revendication 8, dans lequel la première longueur d'onde préréglée est de 1270 nanomètres et la deuxième longueur d'onde préréglée est de 1330 nanomètres.

10. Ensemble de transmission optique selon la revendication 6, dans lequel l'ensemble de transmission optique comprend en outre au moins un filtre ;
une quantité des filtres est égale à la quantité des unités de traitement de réception (42) ; et
le filtre est disposé à un port d'entrée optique de l'unité de traitement de réception (42).

11. Ensemble de transmission optique selon la revendication 6, dans lequel au moins one lentille convexe est en outre disposée sur un chemin optique entre l'unité de traitement de transmission (41) et l'appareil de division optique (7), et une longueur d'onde de ladite au moins une lentille convexe est égale à une longueur d'onde d'un signal optique transmis par l'unité de traitement de transmission (41) ; et
au moins une lentille convexe est en outre disposée sur un chemin optique entre l'unité de traitement de réception (42) et le port d'entrée/sortie optique, et une longueur d'onde de ladite au moins une lentille convexe est égale à une longueur d'onde d'un signal optique reçu par l'unité de traitement de réception (42).
